# EUROPEAN PATENT SPECIFICATION

(11) **EP 3 769 930 B1**
(45) Date of publication and mention of the grant of the patent: **09.02.2022**
(21) Application number: 20182822.5
(22) Date of filing: 29.06.2020
(51) Int. Cl.: B29L 7/00, B29L 24/00, B29C 48/88, B29C 51/02, B29C 51/22, B29D 24/00, B32B 37/20, E04C 2/34, B29C 48/00, B29C 48/07, B29C 48/35, B32B 37/15, B29D 99/00, B32B 27/08, B29C 49/00, B32B 3/28, E04C 2/36

(54) **METHOD AND PLANT FOR THE PRODUCTION OF THREE-LAYER PANELS IN THERMOPLASTIC MATERIAL**
VERFAHREN UND ANLAGE ZUR HERSTELLUNG VON DREISCHICHTIGEN PLATTEN AUS THERMOPLASTISCHEM MATERIAL
PROCÉDÉ ET INSTALLATION POUR LA PRODUCTION DE PANNEAUX À TROIS COUCHES EN MATÉRIAU THERMOPLASTIQUE

(30) Priority: 22.07.2019 IT 201900012594
(43) Date of publication of application: 27.01.2021
(73) Proprietor: BG Plast Impianti S.r.l., 21052 Busto Arsizio (Varese) (IT)
(72) Inventor: ROCCON, Luca, 21049 Tradate (Varese) (IT)
(74) Representative: Petruzziello, Aldo

(56) References cited:
- DE-A1- 2 640 582
- DE-A1- 4 447 239
- US-A- 5 910 226

## Description

The present invention relates to a device and method for the production of panels in thermoplastic material, in particular panels that have a flat upper covering element and a flat lower covering element firmly connected to a central element, where all the elements are obtained by extrusion.

Relatively rigid panels formed by two flat elements or sheets in thermoplastic material that are separated by a non-planar structure, such as a honeycomb structure, also obtained in thermoplastic material, have been known for some time and for various uses. These panels, usually referred to as sandwich panels, have considerably higher mechanical properties than not only simple extruded sheets but also, for example, panels with longitudinal ribs.

In particular, while the latter have different flexural and compressive strength properties in planes perpendicular one to the other, panels with a honeycomb structure inside them have substantially uniform mechanical properties in both longitudinal and transverse directions. This type of panel is generally produced by joining with heat three different sheets, of which the central one is in honeycomb form, usually obtained by thermoforming. The presence of the central sheet gives the product the above-mentioned mechanical and functional qualities. Moreover, thanks to particular honeycomb structures, it is possible to obtain resistance/weight ratios of considerable importance especially in the packaging sector where the interest is to have packaging products with reduced weight.

The processes currently used for the production of sheet with honeycomb structure are substantially of two types.

The first type is a discontinuous process that starts from three strips of identical internal structure wound into reels previously produced in separate plants. The strip that makes up the central layer is then unwound, heated and thermoformed by means of a shaping roller, while the two strips that form the covering elements are in turn unwound and heated and subsequently made to adhere to the thermoformed strip by means of the action of pressure rollers.

The second type of known process is a continuous process in which substantially the strip forming the central honeycomb layer is made to move forwards continuously into a position wherein a first strip is applied to a first face and, at the same time or in succession, a second strip to a second face thereof.

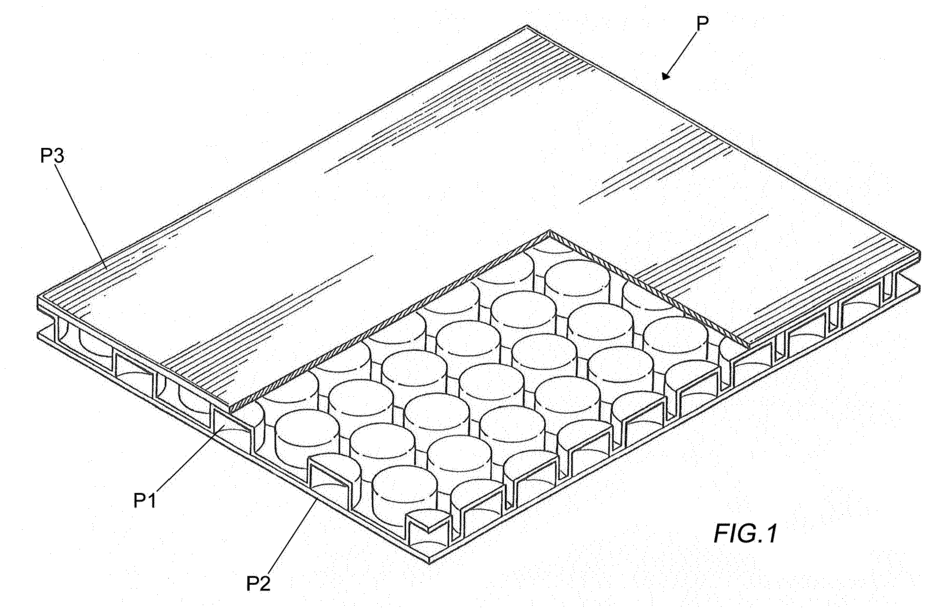

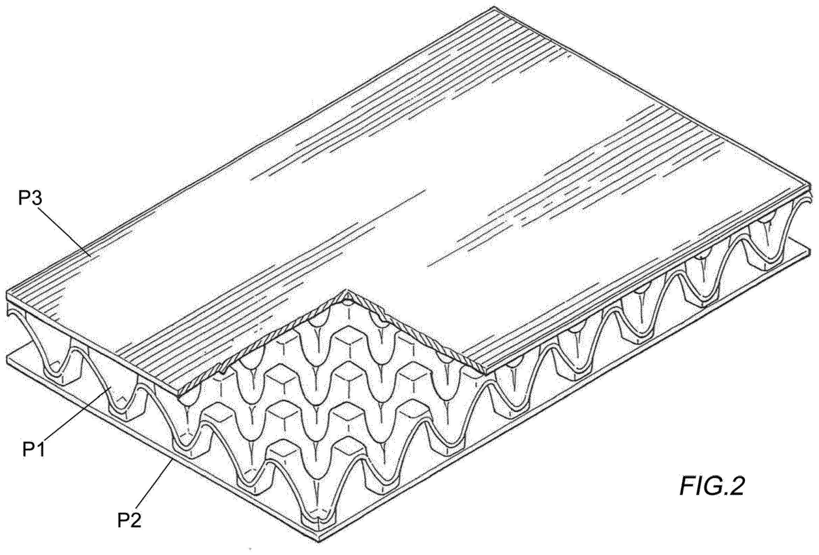

Italian patent no. 1265477 describes a structural panel in plastic comprising at least one flat sheet to which a sheet in honeycomb form is made integral, and a process for obtaining it. According to an embodiment of the process, the honeycomb sheet is formed continuously between a mould and a counter mould consisting of rollers with shaped periphery. A plant for the production of such a panel comprises a device for forming the honeycomb sheet starting from extruded sheet and one or more extruders for the covering sheets. Examples of widely used panels made in this way according to the prior art are shown in Fig. 1, in which a panel comprising a standard "bubble" type three-dimensional layer is illustrated, and in Fig. 2, in which the three-dimensional layer takes on a "bidirectional" configuration. In both cases, the configuration of the central layer is given purely as an example and it is possible to foresee other geometries.

More specifically, the plant comprises two forming rollers with male and female collaborating surfaces just downstream of an extrusion head for producing a strip sheet in plastic material in the honeycomb form foreseen by the shape of the rollers. Alternatively, it is possible to use only one shaping roller equipped with a suction means to create adherence between roller and sheet. The continuous honeycomb strip is then made to pass along an extrusion head which extrudes a continuous strip constituting one of the flat elements of the panel structure and which is made to adhere to the honeycomb element strip by means of a pressure roller. Downstream, an additional extrusion head produces a continuous strip which is made to adhere to the assembly previously obtained by means of pressure rollers for heat sealing.

According to one embodiment, the extruders of the flat elements are at the same level as the production line and in opposite position. In this condition, the flat strip coverings are simultaneously made to adhere to the honeycomb element central strip by means of pressure rollers.

A panel produced by means of this process has excellent properties of adhesion between the layers, but the surface of the layers is hardly ever completely flat due to suction in the spaces between the outer surfaces and the honeycomb structure during cooling. European patent EP 1638770 describes a process and a device for the production of a sandwich panel in plastic material which has more regular surfaces. This system provides for the production of three laminas with coextruded material, preferably in turn with several layers, in which the outer layers are made up of polypropylene laminas with chemical properties comparable to a heat-sealable adhesive.

In sequence, the central lamina of the panel is produced in honeycomb form. The upper and lower laminas are then produced which, before coupling with the central layer, pass over a series of calendering, calibration and cooling cylinders where the laminas are oriented, stabilised and flattened and then are heated again to heat seal the adhesive and ensure the union with the central layer by pressure.

A panel produced by this system has a good flatness on its external surfaces due to the passage of the material on the calendering cylinders but does not guarantee an optimal adhesion between the layers. In addition, like all processes according to the prior art, it has the disadvantage of having to undergo several treatments before the planar surfaces are fixed to the central layer, making the process long, complex and wasteful from an economic and time point of view.

US 5910226 describes a process for the production of a panel in thermoplastic material provided with a corrugated layer that has the characteristic of having series of corrugations transversal one to the other in order to increase the rigidity in all the directions. The process initially provides for the feeding of a first layer of extruded material towards the gap between an appropriately shaped cylinder and a cooling cylinder to form the corrugated layer, which is subsequently coupled to a second flat extruded layer in a gap between a second cooling cylinder and the appropriately shaped cylinder. Optionally, a third extruded layer can be further coupled to the corrugated layer in a subsequent station by means of an additional cooling cylinder. A panel produced in this way does not guarantee high adhesion between the layers, as no means of coupling other than the cooling rollers are provided.

DE 2640582 describes a panel with three layers comprising a central corrugated layer formed by extruded material fed to a first shaped cylinder, a first flat layer formed by a second extruded material fed to a second cylinder and coupled to the corrugated layer in a gap between the two cylinders, and a second cold-preformed flat layer which is coupled to the corrugated layer by means of a pressure cylinder. The production of such a panel provides for the use of a preformed sheet from a strip wound on a reel and therefore cannot be carried out continuously.

The advantage of having a method that guarantees perfect adhesion of the constituent elements while maintaining at the same time a high planarity of the outer layers is therefore evident. It is equally advantageous, moreover, to be able to have a system that is able to bring together in a physical and temporal sense the points that characterise the fundamental phases of the production of such a panel, that is:
i) creation of the three-dimensional central layer
ii) creation of the flat head or upper covering layer and its coupling to the central layer
iii) creation of the flat bottom or lower covering layer and its coupling to the composite structure formed by the other two layers.

The object of the present invention is therefore to provide a method and a plant capable of overcoming the disadvantages listed above of the prior art to produce a composite panel in thermoplastic material with improved mechanical and performance properties.

A further object of the present invention is to provide such a plant that produces a three-layer panel that is considerably improved with respect to similar products on the market by reducing the phenomenon of delamination of the layers, thus increasing the mechanical performances of the extruded product.

Another object of the present invention is to provide such a method that does not use adhesives or other external adhesion elements to seal the three layers.

Yet another object of the present invention is to provide a compact plant in which all the extrusion and adhesion phases of the layers are carried out in a continuous line, thus grouping all the production phases of the layers in a single machine, greatly simplifying the art currently known.

These and other objects are achieved by a method of production of a panel in thermoplastic material according to the invention having the features listed in the appended independent claim 1 and by a relative plant for the realisation of the method, as disclosed in claim 7.

Advantageous embodiments of the invention are disclosed by the dependent claims.

Substantially, the present invention describes a method for the manufacture of panels in thermoplastic material consisting of a central three-dimensional strip element and two flat strip covering elements firmly connected to the central strip element, comprising the phases of continuous extrusion of a first strip by means of a first extrusion assembly that feeds a first shaped cylinder to produce said central three-dimensional strip element; continuous extrusion of a second strip by means of a second extrusion assembly that feeds a second cylinder to produce one of said flat strip covering elements, this strip element being made to adhere to the second cylinder; continuous extrusion of a third strip by means of a third extrusion assembly that feeds a third cylinder to produce the other of said flat strip covering elements, said third strip element being made to adhere to the third cylinder; wherein said central three-dimensional strip element exiting the first cylinder is coupled to one of the flat strip covering elements obtained by means of the second extrusion assembly in a gap between the first and the second cylinder due to the intrinsic heat of the extruded material and the pressure exerted in the gap between the two cylinders, and wherein the composite structure obtained from the coupling of the central three-dimensional strip element and of said strip covering element is in turn coupled to the other strip covering element obtained by means of the third extrusion assembly in a gap between the second cylinder and the third cylinder due to the intrinsic heat of the extruded material and the pressure exerted in the gap between the two cylinders and wherein said first, second and third strips are made to adhere to the respective cylinders by creating a vacuum.

The invention also relates to a plant for implementing the method described here.

Further features of the invention will be made clearer from the detailed description that follows, referring to an embodiment thereof purely by way of a non-limiting example, illustrated in the accompanying drawings, in which:
Figure 1 shows a schematic axonometric view exemplifying a sandwich panel with the central three-dimensional bubble structure;
Figure 2 shows a schematic axonometric view exemplifying a sandwich panel with a three-dimensional central bidirectional structure;
Figure 3 is a schematic view of a plant that performs a process according to the invention;
Figure 4 shows schematically an enlargement of the assembly of cylinders of Figure 3, which allow the production of a sandwich panel with the method according to the invention, with creation of vacuum inside the cylinders; and
Figure 5 is a view like that of Fig. 4 showing schematically an alternative to the creation of vacuum on two of the cylinders.

Figure 1 schematically shows a sandwich panel P, conceptually in itself known, comprising a three-dimensional central bubble layer P1 enclosed between two flat covering elements P2, P3. The structure shown is purely an example and the central element P1 may have a different three-dimensional shape from that shown such as, for example, a bidirectional three-dimensional structure like that shown in Figure 2.

Both the configurations shown above, in themselves known, can be obtained by means of a method and a plant according to the present invention.

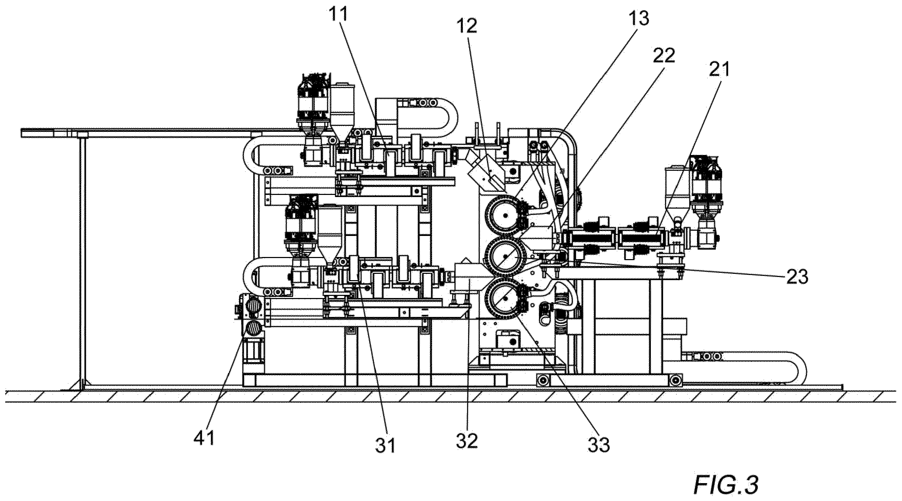

Referring to Figure 3, a plant for the production of a sandwich panel according to the present invention comprises, among others, a first extrusion assembly 11 with an extrusion head 12 which extrudes a first strip of thermoplastic material which is fed to a cylinder 13 provided with a suitable shaping to produce the central three-dimensional strip element P1; a second extrusion assembly 21 with an extrusion head 22 which extrudes the second flat strip element in thermoplastic material P2 which is fed to a cylinder 23; and a third extrusion assembly 31 with an extrusion head 32 which extrudes the third flat strip element in thermoplastic material P3 which is fed to a third cylinder 33.

The three cylinders are placed one in proximity to the other, thus obtaining a compact plant capable of performing the process in very close sequences both from a spatial viewpoint and from a temporal viewpoint. According to the preferred embodiment shown in the drawings, the axes of the three cylinders are arranged on the same vertical plane, but it is not excluded that the axes may be on different planes.

According to the present invention, the extrusion head 22 for the second flat strip P2 is located between the first cylinder 13 and the second cylinder 23 so that the extruded strip comes into direct contact with cylinder 23. Similarly, the extrusion head 32 for the third flat strip P3 is located between the second cylinder 23 and the third cylinder 33 so that the extruded strip comes directly into contact with cylinder 33.

A compact in-line structure is thus obtained for the continuous production of sandwich panels comprising two external covering sheets and a central layer firmly fixed thereto. The result of perfect adhesion between the layers and of excellent planarity of the covering elements is due to the simultaneous combination of pressure and heat. The adhesion of the sheets to the cylinders is obtained by suitable means, in particular by means of pumps that aspirate air through the internal walls of the cylinder or by means of suitable vacuum boxes that aspirate air between the cylinders and the strips coming out of the extrusion heads.

A description is now given in greater detail with reference to Figures 3, 4 and 5 of a process to obtain a panel P that has the features as stated above.

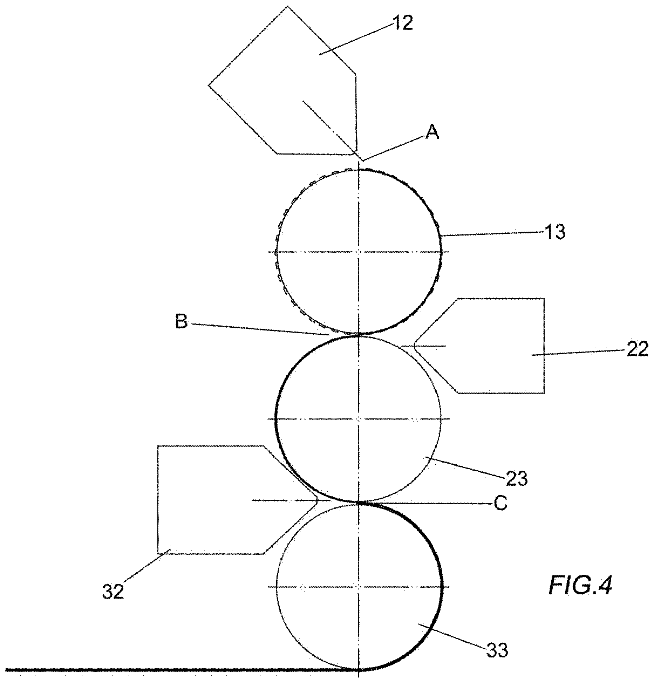

The first assembly 11 of extrusion in flat head 12 produces a first strip which is fed towards cylinder 13 which is provided with a specific shaping. The adhesion of the strip to the cylinder allows the strip to be given a regular three-dimensional structure that forms the central element P1 of the panel. The strip arrives in a planar configuration at an upper position of cylinder 13, denoted by letter A in Figure 4, and leaves cylinder 13 with a three-dimensional conformation in a position B diametrically opposed to position A. Therefore, the strip runs along a semi-cylindrical surface. The adhesion of the layer to the surface of the cylinder is ensured by a suitable means, preferably a suction system inside the cylinder to create vacuum on the semi-cylindrical surface covered between positions A and B.

However, it is possible to make the strip adhere to cylinder 13 by the mechanical action of an additional cylinder of opposite conformation, for example shaped like cylinder 13, where the grooves and reliefs of one intersect in the reliefs and grooves of the other, giving the strip a double three-dimensional configuration.

Once in position B the three-dimensional central strip P1 meets a second flat strip P2, which constitutes a first covering element, extruded from a second flat extrusion head 22 ready to feed a second cylinder 23. In position B, which corresponds to the gap between the surfaces of cylinder 13 and of cylinder 23, cylinders 13, 23 are at an adequate distance, leaving a limited space that allows the passage with contact of the three-dimensional central strip P1 and of the flat strip covering P2 extruded from the second extrusion head 22.

In gap B, the intrinsic heat of the extruded material and the pressure exerted by cylinders 13 and 23 on the central strip P1 and on the flat strip P2, respectively, cause the adhesions between the two strips without the intervention of additional elements or the addition of adhesive agents. In this way a first composite structure is obtained formed by a flat covering strip P2 with a three-dimensional strip P1 firmly attached thereto. Also in the second cylinder a vacuum is created at the semi-cylindrical surface that comes into contact with the flat strip, between position B and a position C diametrically opposed thereto, which goes to determine a complete planarity of the surface of the panel.

The structure thus obtained runs along the surface of cylinder 23 up to position C describing a sort of S during its trajectory. In a similar way to what happens in position B, the composite structure meets a third flat strip P3, which constitutes the other covering element, extruded from a third flat extrusion head 32. In position C, which corresponds to the gap between the surfaces of cylinder 23 and of cylinder 33, cylinders 23, 33 are at an adequate distance leaving a limited space that allows the passage of the previously formed structure and of the flat covering strip P3 extruded from the third extrusion head 32.

Also in gap C, the intrinsic heat of the extruded material and the pressure exerted by cylinders 23 and 33 on the previously formed composite structure and on the flat strip P3, respectively, cause the adhesion between the two elements, obtaining a composite structure in thermoplastic material consisting of a three-dimensional central element P1 interposed between two flat covering elements P2, P3 firmly connected one to the other.

The composite strip element thus obtained at the exit of the third cylinder 33 is then taken by means of a driving element 41 (which can be seen in Fig. 3) and is ready to be cut in order to obtain the panels of the desired dimensions. In this way, a sandwich panel P in thermoplastic material such as the one shown in Figs. 1 and 2 is produced using an efficient and improved method that eliminates the disadvantages discussed previously.

The method according to the invention can be completed by possible additional treatments before cutting, such as for example calibration, stabilisation or application of additional pre-printed films (e.g. advertising prints) to the surfaces of the panel covering elements during the calendering phase of the respective strips in positions B and C, which will not be further described as they are well known to a person skilled in the art.

With reference in particular to Figure 3, a description is now given in greater detail of the structure of the plant for the production of sandwich panels in thermoplastic material according to the present invention, already described in brief previously. The plant is substantially formed by three extrusion assemblies, one for each strip element forming the sandwich panel, and by three cylinders arranged in series leaving an adequate space or gap between one cylinder and the other.

In the preferred embodiment, the plant provides a first extruder assembly 11 equipped with

a head 12 of extrusion in flat foil configured to feed in a position A a first cylinder 13 provided with a non-smooth surface to obtain the three-dimensional strip element P1. The extruder 11 and the extrusion head 12 are arranged in such a way as to feed the first cylinder 13 from above. The first cylinder 13 is associated with a first vacuum pump to create a vacuum between a semi-cylindrical surface thereof and the strip running along it and thus ensure adhesion thereof.

The plant is provided with a second cylinder 23 and with a third cylinder 33 with a planar external surface, such that the gap between the external surfaces of the first cylinder 13 and of the second cylinder 23 is in a position B diametrically opposite with respect to position A of the first cylinder 13, and the gap between the external surfaces of the second cylinder 23 and of the third cylinder 33 is in a position C diametrically opposite with respect to position B of the second cylinder 33. From this configuration it results that the axes of the three cylinders 13, 23, 33 are on the same vertical plane.

At positions B and C a second extrusion head 22 and a third extrusion head 32 are provided, respectively of a second extrusion assembly 21 and a third extrusion assembly 31. The second extrusion head 22 extrudes a second strip P2, which constitutes a first covering element, to couple to the first three-dimensional strip P1 and the third extrusion head 32 extrudes a third strip P3, which constitutes a second covering element, to couple to the composite structure previously obtained. In the embodiment, in order to be able to couple the extruded strips to those obtained from the previous phases in positions B and C defined above, the extrusion heads 22, 32 are arranged in a substantially horizontal direction one opposite the other, feeding the extruded strips in the same direction from which the strips from the previous phase come.

Similarly to what happens for the first cylinder 13, cylinders 23, 33 are associated with respective vacuum pumps to create vacuum between the strips and the semi-cylindrical surface they run over.

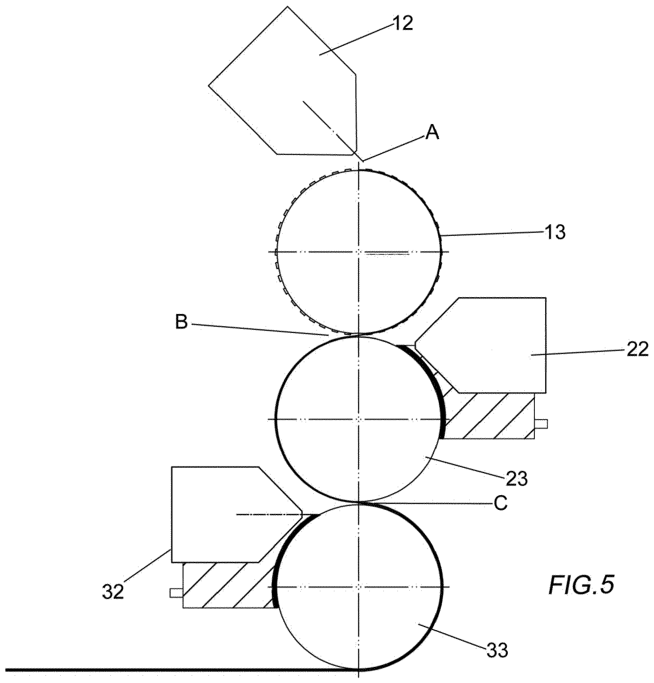

As shown in Fig. 5, in one embodiment vacuum boxes 25, 35 are provided between cylinders 23, 33 and the strip coming out of the extrusion heads 22, 32.

The plant is completed by a collection drive 41 to collect the product obtained at the end of the forming path between the cylinders and to make it advance to the exit point, where a final cutting line is provided. Before cutting, additional treatment stations such as calibration, stabilisation, application of advertising prints, etc., can be provided, which are well known to persons skilled in the art and which will not be dealt with in detail further. In particular, in the gaps B and C between cylinders 13, 23 and 23, 33, respectively, printed films can be applied hot in calendering to the strip coverings P2 and P3.

## Claims

1. Method for producing panels (P) in thermoplastic material consisting of a three-dimensional central strip element (P1) and two flat strip covering elements (P2, P3) firmly fastened to the central strip element (P1), comprising the following steps:
- continuously extrusion of a first strip by means of a first extrusion assembly (11) which feeds a first cylinder (13) shaped to produce said three-dimensional central strip element (P1);
- continuous extrusion of a second strip by means of a second extrusion assembly (21) which feeds a second cylinder (23) to produce one of said flat strip covering elements (P2), said second flat strip element being made to adhere to the second cylinder (23);
- continuous extrusion of a third strip by means of a third extrusion assembly (31) which feeds a third cylinder (33) to produce the other of said flat strip covering elements (P3), said third flat strip covering element being made to adhere to the third cylinder (33); **characterised in that** said three-dimensional central strip element (P1) leaving the first cylinder (13) is coupled to said flat strip element (P2) obtained by means of the second extrusion assembly (21) in a gap between the first cylinder (13) and the second cylinder (23) as a result of the intrinsic heat of the extruded material and of the pressure exerted in the gap between the two cylinders (13, 23), **in that** the composite structure obtained by coupling said three-dimensional central strip element (P1) and said flat strip covering element (P2) is in turn coupled to the other flat strip covering element (P3) obtained by means of the third extrusion assembly (31) in a gap between the second cylinder (23) and the third cylinder (33) as a result of the intrinsic heat of the extruded material and of the pressure exerted in the gap between the two cylinders (23, 33), and **in that** said first, second and third strips (P1, P2, P3) are made to adhere to the respective cylinders (13, 23, 33) by creating vacuum.

2. Method for producing panels in thermoplastic material according to claim 1, wherein said vacuum is created between the strips and the cylinders.

3. Method for producing panels in thermoplastic material according to claim 1 or 2, wherein the vacuum is created by aspirating air through a portion of the wall of the cylinders (13, 23, 33).

4. Method for producing panels in thermoplastic material according to claim 3, wherein said portion is equal to half of the external surface of cylinders (13, 23, 33).

5. Method for producing panels in thermoplastic material according to claim 1 or 2, wherein the vacuum is created by aspirating air between said cylinders (13, 23, 33) and the strip leaving extrusion heads (12, 22, 32) of said extrusion assemblies (11, 21, 31), by means of vacuum boxes.

6. Method according to claim 1, wherein said first three-dimensional strip (P1) is obtained by means of a shaping counter cylinder co-operating with said first cylinder (13).

7. Plant for producing panels in thermoplastic material using the method according to claim 1, comprising a first extrusion assembly (11) with an extrusion head (12) designed to feed a first strip to a first cylinder (13) in a position (A), said first cylinder (13) having a shaped surface to produce a three-dimensional central strip element (P1), a second extrusion assembly (21) with an extrusion head (22) designed to feed a second strip (P2) towards a gap (B) between said first cylinder (13) and a second cylinder (23) where it meets said three-dimensional central strip (P1), and a third extrusion assembly (31) with an extrusion head (32) designed to feed a third strip (P3) towards a gap (C) between said second cylinder (13) and a third cylinder (33) wherein it meets a structure formed by the combination of the three-dimensional central strip (P1) and of the second strip (P2), means for creating vacuum being provided for making said strips (P1, P2, P3) adhere to respective cylinders (13, 23, 33).

8. Plant according to claim 7, wherein respective pumps are coupled to the three cylinders (13, 23, 33) to aspirate air through a portion of the external surface of said cylinders to create vacuum between said strips (P1, P2, P3) and respective cylinders (13, 23, 33) ensuring adhesion thereof.

9. Plant according to claim 7, wherein vacuum boxes are provided for drawing air between the cylinders (13, 23, 33) and the strips leaving said respective extrusion heads (12, 22, 32) in order to obtain the adhesion of said strips (P1, P2, P3) to respective cylinders (13, 23, 33).

10. Plant according to one of claims 7 to 9, wherein the axes of cylinders (13, 23, 33) are arranged on a same plane and the extrusion heads (22, 32) are arranged in order to extrude the strips (P2, P3) in said gaps (B, C) between said cylinders.

## Patentansprüche

1. Verfahren zur Herstellung von Platten (P) aus thermoplastischem Material bestehend aus einem dreidimensionalen zentralen Streifenelement (P1) und zwei mit dem zentralen Streifenelement (P1) fest verbundenen flachen Streifen-Abdeckelementen (P2, P3), umfassend die folgenden Schritte:
- kontinuierliche Extrusion eines ersten Streifens mittels einer ersten Extrusionsanordnung (11), die einen ersten Zylinder (13) speist, der geformt ist, um das dreidimensionale zentrale Streifenelement (P1) herzustellen;
- kontinuierliche Extrusion eines zweiten Streifens mittels einer zweiten Extrusionsanordnung (21), die einen zweiten Zylinder (23) speist, um eines der flachen Streifen-Abdeckelemente (P2) herzustellen, wobei das zweite flache Streifenelement dazu gebracht wird, an dem zweiten Zylinder (23) zu haften;
- kontinuierliche Extrusion eines dritten Streifens mittels einer dritten Extrusionsanordnung (31), die einen dritten Zylinder (33) speist, um das andere der flachen Streifen-Abdeckelemente (P3) herzustellen, wobei das dritte flache streifen-Abdeckelement dazu gebracht wird, an dem dritten Zylinder (33) zu haften;
**dadurch gekennzeichnet, dass** das aus dem ersten Zylinder (13) austretende dreidimensionale zentrale Streifenelement (P1) mit dem flachen Streifenelement (P2) gekoppelt wird, das mittels der zweiten Extrusionsanordnung (21) in einem Spalt zwischen dem ersten Zylinder (13) und dem zweiten Zylinder (23) infolge der Eigenwärme des extrudierten Materials und des im Spalt zwischen den beiden Zylindern (13, 23) ausgeübten Drucks erhalten wird, dadurch, dass die Verbundstruktur, die durch Kopplung des dreidimensionalen zentralen Streifenelements (P1) und des flachen Streifen-Abdeckelements (P2) erhalten wird, wiederum mit dem anderen flachen Streifen-Abdeckelement (P3) gekoppelt wird, das mittels der dritten Extrusionsanordnung (31) in einem Spalt zwischen dem zweiten Zylinder (23) und dem dritten Zylinder (33) infolge der Eigenwärme des extrudierten Materials und des im Spalt zwischen den beiden Zylindern (23, 33) ausgeübten Drucks erhalten wird, und dadurch, dass
der erste, zweite und dritte Streifen (P1, P2, P3) dazu gebracht werden, durch Erzeugen von Vakuum an den jeweiligen Zylindern (13, 23, 33) zu haften.

2. Verfahren zur Herstellung von Platten aus thermoplastischem Material nach Anspruch 1, wobei das Vakuum zwischen den Streifen und den Zylindern erzeugt wird.

3. Verfahren zur Herstellung von Platten aus thermoplastischem Material nach Anspruch 1 oder 2, wobei das Vakuum durch Ansaugen von Luft durch einen Abschnitt der Wand der Zylinder (13, 23, 33) erzeugt wird.

4. Verfahren zur Herstellung von Platten aus thermoplastischem Material nach Anspruch 3, wobei der Abschnitt der Hälfte der Außenoberfläche der Zylinder (13, 23, 33) entspricht.

5. Verfahren zur Herstellung von Platten aus thermoplastischem Material nach Anspruch 1 oder 2, wobei das Vakuum durch Ansaugen von Luft zwischen den Zylindern (13, 23, 33) und dem Streifen, der aus den Extrusionsköpfen (12, 22, 32) der Extrusionsanordnungen (11, 21, 31) austritt, mittels Vakuumkästen erzeugt wird.

6. Verfahren nach Anspruch 1, wobei der erste dreidimensionale Streifen (P1) mittels eines mit dem ersten Zylinder (13) zusammenwirkenden formgebenden Gegenzylinders erhalten wird.

7. Anlage zur Herstellung von Platten aus thermoplastischem Material nach dem Verfahren nach Anspruch 1, umfassend eine erste Extrusionsanordnung (11) mit einem Extrusionskopf (12), der konzipiert ist, um einen ersten Streifen einem ersten Zylinder (13) in einer Position (A) zuzuführen, wobei der erste Zylinder (13) eine geformte Oberfläche aufweist, um ein dreidimensionales zentrales Streifenelement (P1) herzustellen, eine zweite Extrusionsanordnung (21) mit einem Extrusionskopf (22), der konzipiert ist, um einen zweiten Streifen (P2) in Richtung eines Spalts (B) zwischen dem ersten Zylinder (13) und einem zweiten Zylinder (23) zuzuführen, wo er auf den dreidimensionalen zentralen Streifen (P1) trifft, und eine dritte Extrusionsanordnung (31) mit einem Extrusionskopf (32), der konzipiert ist, um einen dritten Streifen (P3) zu einem Spalt (C) zwischen dem zweiten Zylinder (13) und einem dritten Zylinder (33) zuzuführen, wobei er auf eine Struktur trifft, die durch die Kombination des dreidimensionalen zentralen Streifens (P1) und des zweiten Streifens (P2) gebildet wird, wobei Mittel zum Erzeugen von Vakuum bereitgestellt sind, um die Streifen (P1, P2, P3) dazu zu bringen, an den jeweiligen Zylindern (13, 23, 33) zu haften.

8. Anlage nach Anspruch 7, wobei jeweilige Pumpen mit den drei Zylindern (13, 23, 33) gekoppelt sind, um Luft durch einen Abschnitt der Außenoberfläche der Zylinder anzusaugen, um ein Vakuum zwischen den Streifen (P1, P2, P3) und jeweiligen Zylinder (13, 23, 33) zu erzeugen, die deren Haftung sicherstellen.

9. Anlage nach Anspruch 7, wobei Vakuumkästen zum Ansaugen von Luft zwischen den Zylindern (13, 23, 33) und den aus den jeweiligen Extrusionsköpfen (12, 22, 32) austretenden Streifen bereitgestellt sind, um die Haftung der Streifen (P1, P2, P3) an den jeweiligen Zylindern (13, 23, 33) zu erhalten.

10. Anlage nach einem der Ansprüche 7 bis 9, wobei die Achsen der Zylinder (13, 23, 33) in einer gleichen Ebene angeordnet sind und die Extrusionsköpfe (22, 32) zum Extrudieren der Streifen (P2, P3) in den Spalten (B, C) zwischen den Zylindern angeordnet sind.

## Revendications

1. Procédé de production de panneaux (P) en matériau thermoplastique consistant en un élément à bande centrale tridimensionnelle (P1) et deux éléments de recouvrement à bande plate (P2, P3) attachés fixement à l'élément à bande centrale (P1), comprenant les étapes suivantes :
- extrusion continue d'une première bande au moyen d'un premier ensemble d'extrusion (11) qui alimente un premier cylindre (13) conformé pour produire ledit élément à bande centrale tridimensionnelle (P1) ;
- extrusion continue d'une deuxième bande au moyen d'un deuxième ensemble d'extrusion (21) qui alimente un deuxième cylindre (23) pour produire un desdits éléments de recouvrement à bande plate (P2), ledit second élément à bande plate étant fait pour adhérer au deuxième cylindre (23) ;
- extrusion continue d'une troisième bande au moyen d'un troisième ensemble d'extrusion (31) qui alimente un troisième cylindre (33) pour produire l'autre desdits éléments de recouvrement à bande plate (P3), ledit troisième élément de recouvrement à bande plate étant fait pour adhérer au troisième cylindre (33) ;
**caractérisé en ce que** ledit élément à bande centrale tridimensionnelle (P1) quittant le premier cylindre (13) est couplé audit élément à bande plate (P2) obtenu au moyen du deuxième ensemble d'extrusion (21) dans un intervalle entre le premier cylindre (13) et le deuxième cylindre (23) en résultat de la chaleur intrinsèque du matériau extrudé et de la pression exercée dans l'intervalle entre les deux cylindres (13, 23), **en ce que** la structure composite est obtenue en couplant ledit élément à bande centrale tridimensionnelle (P1) et que ledit élément de recouvrement à bande plate (P2)
est à son tour couplé l'autre élément de recouvrement à bande plate (P3) obtenu au moyen du troisième ensemble d'extrusion (31) dans un intervalle entre le deuxième cylindre (23) et le troisième cylindre (33) en résultat de la chaleur intrinsèque du matériau extrudé et de la pression exercée dans l'intervalle entre les deux cylindres (23, 33), et **en ce que**
lesdites première, seconde et troisième bandes (P1, P2, P3) sont faites pour adhérer aux cylindres respectifs (13, 23, 33) en créant du vide.

2. Procédé de production de panneaux en matériau thermoplastique selon la revendication 1, dans lequel ledit vide est créé entre les bandes et les cylindres.

3. Procédé de production de panneaux en matériau thermoplastique selon la revendication 1 ou 2, dans lequel le vide est créé en aspirant de l'air à travers une partie de la paroi des cylindres (13, 23, 33).

4. Procédé de production de panneaux en matériau thermoplastique selon la revendication 3, dans lequel ladite partie est égale à la moitié de la surface externe des cylindres (13, 23, 33).

5. Procédé de production de panneaux en matériau thermoplastique selon la revendication 1 ou 2, dans lequel le vide est créé en aspirant de l'air entre lesdits cylindres (13, 23, 33) et les têtes d'extrusion quittant la bande (12, 22, 32) desdits ensembles d'extrusion (11, 21, 31) au moyen de compartiments sous vide.

6. Procédé selon la revendication 1, dans lequel ladite première bande tridimensionnelle (P1) est obtenue par conformation d'un contre-cylindre coopérant avec ledit premier cylindre (13).

7. Équipement de production de panneaux en matériau plastique en utilisant le procédé selon la revendication 1, comprenant un premier ensemble d'extrusion (11) doté d'une tête d'extrusion (12) conçue pour apporter une première bande à un premier cylindre (13) dans une position (A), ledit premier cylindre (13) ayant une surface conformée pour produire un élément à bande centrale tridimensionnelle (P1), un deuxième ensemble d'extrusion (21) doté d'une tête d'extrusion (22) conçue pour apporter une deuxième bande (P2) vers un intervalle (B) entre ledit premier cylindre (13) et un deuxième cylindre (23) où elle rencontre ladite bande centrale tridimensionnelle (P1), et un troisième ensemble d'extrusion (31) doté d'une tête d'extrusion (32) conçue pour apporter une troisième bande (P3) vers un intervalle (C) entre ledit deuxième cylindre (13) et un troisième cylindre (33) où elle rencontre une structure formée par la combinaison de la bande centrale tridimensionnelle (P1) et de la seconde bande (P2), un moyen de création de vide étant prévu pour faire adhérer lesdites bandes (P1, P2, P3) aux cylindres respectifs (13, 23, 33).

8. Équipement selon la revendication 7, dans lequel des pompes respectives sont couplées aux trois cylindres (13, 23, 33) pour aspirer de l'air à travers une partie de la surface externe desdits cylindres afin de créer de vide entre lesdites bandes (P1, P2, P3) et les cylindres respectifs (13, 23, 33) en assurant leur adhérence.

9. Équipement selon la revendication 7, dans lequel des compartiments sous vide sont prévus pour attirer l'air entre les cylindres (13, 23, 33) et les bandes quittant lesdites têtes d'extrusion respectives (12, 22, 32) afin d'obtenir l'adhérence desdites bandes (P1, P2, P3) aux cylindres respectifs (13, 23, 33).

10. Équipement selon l'une quelconque des revendications 7 à 9, dans lequel les axes des cylindres (13, 23, 33) sont disposés sur un même plan et les têtes d'extrusion (22, 32) sont disposées de manière à extruder les bandes (P2, P3) dans lesdits intervalles (B, C) entre lesdits cylindres.
